# EUROPEAN PATENT SPECIFICATION

(11) **EP 1 363 412 B1**
(45) Date of publication and mention of the grant of the patent: **26.10.2005**
(21) Application number: 02253501.7
(22) Date of filing: 17.05.2002
(51) Int. Cl.: H04B 7/185, H04B 1/40

(54) **Hybrid radio frequency transceiver**
Hybrider Funksendeempfänger
Emetteur-récepteur hybride de radiofréquence

(43) Date of publication of application: 19.11.2003
(73) Proprietor: Agilis Communication Tech. Pte. Ltd., Singapore 609602 (SG)
(72) Inventor: Kwong, Nixon Ng Ho, Singapore 680184 (SG); Kumaresh, Ramamurthy, Singapore 600218 (SG); Ratchumari, Sriinvasa Rao, Singapore 120312 (SG); Somasundram, s/o Palanisamy, Singapore 600218 (SG)
(74) Representative: Haley, Stephen

(56) References cited:
- WO-A-00/03494
- GOLDBERG H ET AL: "A MAN-PORTABLE X-BAND TERMINAL SYSTEM" BRIDGING THE GAP BETWEEN INTEROPERABILITY, SURVIVABILITY, SECURITY. BOSTON, OCT. 15 - 18, 1989. THREE VOLUMES BOUND AS ONE, PROCEEDINGS OF THE MILITARY COMMUNICATIONS CONFERENCE. (MILCOM), NEW YORK, IEEE, US, vol. VOLS. 1 - 3, 15 October 1989 (1989-10-15), pages 457-462, XP000131861

## Description

The present invention relates to a hybrid radio frequency transceiver and refers particularly, though not exclusively, to such a transceiver for receiving and converting signals of at least one frequency band to another frequency band.

Conventional transceivers such as very small aperture terminals ("VSAT"s) have been used for many years in voice and data applications. The data rate for them ranged from low to medium. Also, over the years radio frequency transceivers ("RFT"s) used in VSATs have been used with a 70/140 MHz intermediate frequency interface. Because of the Internet boom, data communication has become more prolific and, with this, the requirement for bandwidth has grown. Also, the VSAT market has become more consumer oriented rather than being solely for industrial purposes. This has resulted in pushes for substantial reduction of hardware cost.

With the increased demand for bandwidth, 70/140 MHz systems were changed to L band systems. Using the L band has the advantage of being able to use the entire 500 MHz bandwidth whereas, with the 70/140 MHz systems, one may be faced with only 36/72 MHz (one transponder) being available.

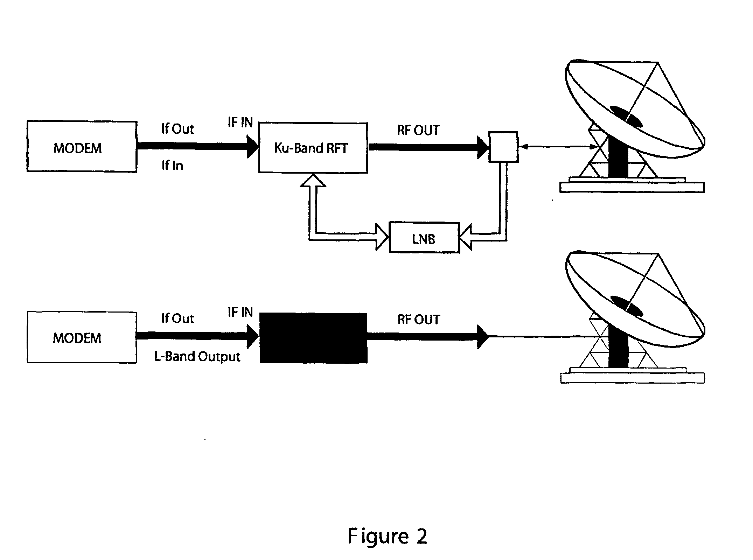

The difficulty faced by many customers was to introduce the L band systems into their network without discarding the existing 70/140 MHz systems. Even in the present broadband era, there are requirements for low data rate systems such as, for example, voice networks, supervisory applications, and network monitoring purposes. For these, the 70/140 MHz systems can be used. The present solution is illustrated in Figure 2. Here there are two separate systems that are combined at the antenna, which is the final stage. The main disadvantage of this system is that as the two systems are treated separately for most of the signal processing, there is a substantial cost increase due to duplication in hardware.

Normally all RFTs use dual conversion when converting 70/140 MHz to C band or Ku band. This means that the 70/140 MHz is first converted to L band and then to C or Ku band. This concept was used to split the unit into two.

It also involves substantial signal loss after the final stage, which is a direct result of an inefficient system. When the two systems are combined in this way there will be a minimum loss of 3dB about half the power. This will result in higher power RETs being needed, which will again increase the cost of the equipment. The reason for this is because RIFTs in VSATs are a major part of the cost - normally about 30 % of the construction cost.

"Goldberg H et al; "A Man Portable X-Band Terminal System" Bridging the gap between interoperability, survivability, security. Proceedings of MILCOM, New York, IEEE, US, Vol 1 - 3, 15 Oct 1989, pages 457-462, XP 000131861 discloses a concept for a man-portable X-band SATCOM system and its performance analysis. The concept uses the transmission of two signals, namely on UHF and SHF.

WO-A-0003494 discloses a method and system for simplified signal processing between the feed horn and frame relay equipment. Data is directly modulated from the frame relay equipment onto an L-band carrier and block up-converted for output at the feed horn. A reference signal is also used.

It is therefore the principal object of the present invention to provide a system where two different frequency systems (such as, for example, 70/140 MHz and L band) can be combined into the same RIFT.

A further object is to provide a system to combine signals in different frequency bands where the legacy systems can be augmented without completely disturbing the legacy system.

A final object is to provide a system for combining signals of different frequency bands where the combining is at the antenna feed end, the combined signal being processed through the rest of the system.

With the above and other objects in mind, the present invention provides a hybrid radio frequency transceiver system comprising a single radio frequency transceiver able to send signals originating in at least two different frequency bands, and arranged such that signals in a first frequency band are sent for transmission without conversion, and a converter for converting signals in all other frequency bands to the first frequency band before being sent to the radio frequency transceiver, and characterised by an auxiliary port for connecting signals in the first frequency band on both a receive side and a transmit side for connecting signals in the first frequency band on both a receive side and a transmit side.

In another form, the present invention provides a method for converting signals for a hybrid radio frequency transceiver system using a single radio frequency transceiver able to send signals originating in at least two different frequency bands, signals in a first frequency band are sent for transmission without conversion, and signals in all other frequency bands are converted to the first frequency band using a converter before being sent to the radio frequency transceiver and characterised by the step of providing an auxiliary port for signals in the first frequency band on both a receive side and a transmit side.

For both forms, there may be two frequency bands, the first band being the L band frequency band, and a second band, the second band being in the intermediate frequency range of 70/140 ± 18/36 MHz and being converted to the first band. The conversion may be by an up/down converter that is also able to convert received signals from the first frequency range to the second frequency range. There may be provided an auxiliary port for signals In the first frequency band on both a receive arid a transmit sides, and there may also be provided independent gain control for signals in the first frequency band. Dual conversion is preferably used to minimize spectral inversion. The converter may include a multiplexer for combining all signals in the first frequency band with a reference signal and a DC voltage signal. Furthermore, the converter may be set for a required frequency band for bath the first band and the second band.

In order that the invention may be readily understood and put into practical effect, there shall now be described by way of non-imitative example only a preferred embodiment of the present invention, the description being with reference to the accompanying illustrative drawings, in which:
Figure 1 is a block diagram of the system of the present invention; and
Figure 2 is a block diagram showing the prior art system presently in use.

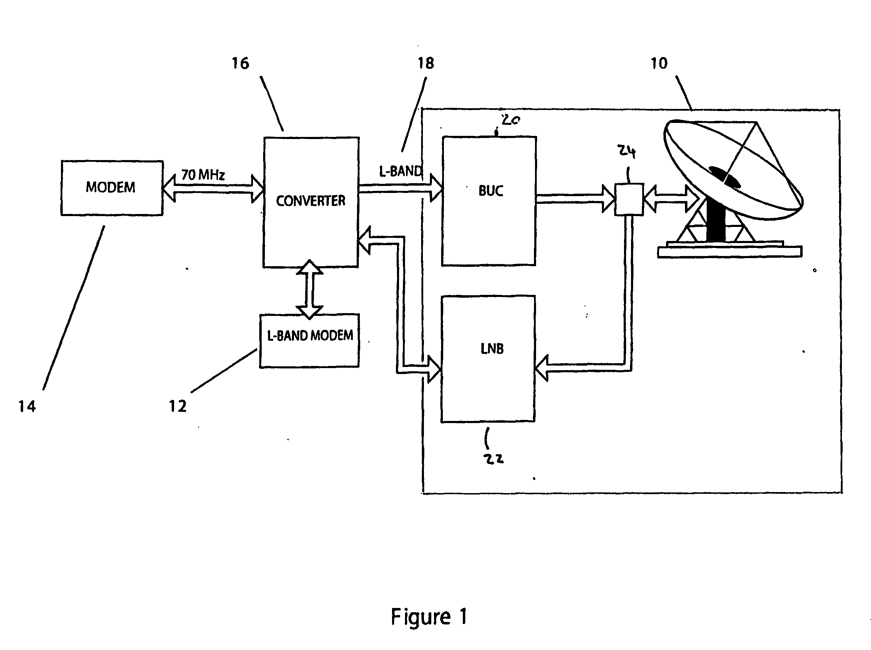

To refer to Figure 1, there is shown a system having a single RFT 10 for both frequency band systems hence reducing the cost. In this system the L-band signals 12 in the range 950 - 1450 MHz and the intermediate frequency signals 14 in the range 70/140 ± 18/36 MHz are both fed into a converter 16, which is before the RFT 10, and the output signals 18 of converter 16 are fed to the RFT 10 via a block up converter 20 and low noise block converter 22. The one RFT 10 transmits the signals irrespective of their original frequency range. With this system, the first conversion takes place indoors, while the second conversion is performed outdoors using the L band RFT.

The converter 16 converts the intermediate frequency range signals in the range 70/140 + 18/36 MHz, to L-band signals in the range 950 -- 1450 MHz. It may be a rack mount up /down converter that is designed to provide a number of functions including a frequency conversion of intermediate frequency signals in the range 70/140 ± 18/36 MHz, to L band signals in the range 950 - 1450 MHz. This is done on the transmit side. It also converts L band signals in the range 950 - 1450 MHz, to intermediate frequency signals in the range 70/140 ± 18/36 MHz, on the receive side. In addition there is provided an auxiliary L band port 20 for connecting the L band system on both the transmit and receive sides There may also be independent gain control for the L band frequency range signals.

Up /down converter 16 can be effectively used with any L band outdoor equipment and provides a standard interface required for L band outdoor equipment. Up/down converter 16 can be controlled and monitored from a normal front control panel through a LCD, and soft keys for easy operation. It may have built-in test equipment to monitor the status of individual modules on the front panel display.

On the transmit side the up converter 16 provides frequency conversion from 70/140 MHz to the L band frequency range. Dual conversion is used to minimize spectral inversion. The L band, DC and the 10 MHz reference signal required for outdoor block up converters are multiplexed and provided at the transmit output. The equipment may be interfaced with either a C band or a Ku band RF outdoor unit.

The receive side takes L band input in the range 950 - 1450 MHz and down converts it to the intermediate frequency range 70/140 ± 18/36 MHz. Again, the down conversion employs dual conversion to minimize spectral inversion. The receive chain may be interfaced with a C band or Ku band LNB. The L band RF input port may provide DC voltage and the 10 MHz reference required for the LNB.

Although the embodiment illustrated uses the intermediate frequency range of 70/140 ± 18/36 MHz, and the L band frequency range of 950 - 1450 MHz, the up/down converter 16 may be able to be set for any required frequency. That adjustment ability may be in steps of 1 MHz, and may be through independent synthesizers. The units can be configured through the front panel LCD display through soft keys. The synthesizers may be referenced to a high frequency oven controlled 10 MHz reference oscillator. The stability of the oscillator is of the order of 10 exp. -9.

The transmit and receive levels of converter 16 may be controlled by digital attenuators that may provide a variation of 20 dB. The attenuators may be controlled from the front panel by use of the transmit and receive menus.

The auxiliary L band port 20 input may receive L band signals from the L band system. It may also have the facility to block the DC and 10 MHz signals emanating from the L band system. On the receive side, the converter 16 receives L band signals from the RFT and feeds it to the demodulator.

The L band converter 16 may also house a multiplexer both at the transmit and the receive side. The main function of the multiplexer is to combine the L band signal, the 10 MHz signal and the DC power, to be provided at a single port. On the transmit side the combined output can be fed into a C band or Ku band block up converter. On the receive side it may interface with a C or Ku band LNB to obtain intermediate frequency signals in the range 70/140 ± 18/36 MHz.

By combining the signals of different frequency ranges at the L band stage reduces the cost over the previous system of where it is performed in the C or Ku band, which is expensive.

Also since the system involves a single L band RFT at the output, the number of components used is less as one stage is transferred indoors. This increases the reliability of the product.

Whilst there has been described in the foregoing description a preferred embodiment of the present invention, as will be understood by a person skilled in the technology, there may be many variations in details of design or construction without departing from the present invention.

The present invention extends to all features disclosed either individually or in all possible permutations and combinations.

## Claims

1. A hybrid radio frequency transceiver system comprising a single radio frequency transceiver (10) able to send signals originating in at least two different frequency bands, and arranged such that signals in a first frequency band are sent for transmission without conversion, and a converter (16) for converting signals in all other frequency bands to the first frequency band before being sent to the radio frequency transceiver (10), and **characterised by** an auxiliary port for connecting signals in the first frequency band on both a receive side and a transmit side.

2. The hybrid radio frequency transceiver system as claimed in claim 1, wherein there are two frequency bands, the first band being the L band frequency band (12), and a second band.

3. The hybrid radio frequency transceiver system as claimed in claim 2, wherein the second band is in the intermediate frequency range of 70/140 ± 18/36 MHz.

4. The hybrid radio frequency transceiver system as claimed in claim 2 or 3, wherein the second band is converted to the first band.

5. The hybrid radio frequency transceiver system as claimed in claim 2, wherein the converter (16) is an up/down converter (16) is also able to convert received signals from the first frequency band to the second frequency band.

6. The hybrid radio frequency transceiver system as claimed in claim 1, wherein there is provided independent gain control for signals in the first frequency band.

7. The hybrid radio frequency transceiver system as claimed in claim 1, wherein dual conversion is used.

8. The hybrid radio frequency transceiver system as claimed claim 5, wherein the up/down converter (16) includes a multiplexer for combining all signals in the first frequency band with a reference signal and a DC voltage signal.

9. The hybrid radio frequency transceiver system as claimed in claim 4 or 7, wherein the converter (16) can be set for a required frequency band for both the first band and the second band.

10. The hybrid radio frequency system according to any preceding claim, wherein the converter (16) sends signals to the radio frequency transceiver (10) via a block up converter (20).

11. The hybrid radio frequency transceiver system according to any preceding claim, wherein the converter receives the signals via a low noise block converter (22).

12. A method for converting signals for a hybrid radio frequency transceiver system using a single radio frequency transceiver (10) able to send signals originating in at least two different frequency bands, signals in a first frequency band are sent for transmission without conversion, and signals in all other frequency bands are converted to the first frequency band using a converter (16) before being sent to the radio frequency transceiver (10) and **characterised by** the step of providing an auxiliary port (20) for signals in the first frequency band on both a receive side and a transmit side.

13. The method as claimed in claim 12, wherein there are two frequency bands, the first band being the L band frequency band (12), and a second band.

14. The method as claimed in claim 13, wherein the second band is in the intermediate frequency band of 70/140 ± 18/36 MHz.

15. The method as claimed in claim 13, wherein the second band is converted to the first band.

16. The method as claimed in claim 12, wherein the converter (16) is by an up/down converter (16) that also converts received signals from the first frequency band to the second frequency band.

17. The method as claimed in claim 12, wherein there is provided independent gain control for signals in the first frequency band.

18. The method as claimed in claim 12, wherein dual conversion is used.

19. The method as claimed claim 16, wherein the converter (16) includes a multiplexer for combining all signals in the first frequency band with a reference signal and a DC voltage signal.

20. The method as claimed in claim 15 or 18, wherein the converter (16) is first set to a required frequency band for both the first frequency band and the second frequency band.

## Patentansprüche

1. Hybrid-Hochfrequenztransceiversystem, umfassend einen einzelnen Hochfrequenztransceiver (10), der in der Lage ist, Signale zu senden, die in wenigstens zwei verschiedenen Frequenzbändern entstehen, und so konfiguriert ist, dass Signale in einem ersten Frequenzband zur Übertragung ohne Umwandlung versendet werden, und einen Konverter (16) zum Umwandeln von Signalen in allen anderen Frequenzbändern in das erste Frequenzband, bevor sie zu dem Hochfrequenztransceiver (10) versandt werden, und **gekennzeichnet durch** einen Hilfsanschluss zum Verbinden von Signalen in dem ersten Frequenzband sowohl auf einer Empfängerseite als auch auf einer Senderseite.

2. Hybrid-Hochfrequenztransceiversystem nach Anspruch 1, wobei es zwei Frequenzbänder gibt, nämlich das erste Band, welches das L-Band-Frequenzband (12) ist, und ein zweites Band.

3. Hybrid-Hochfrequenztransceiversystem nach Anspruch 2, wobei das zweite Band im Zwischenfrequenzbereich von 70/140 ±18/36 MHz liegt.

4. Hybrid-Hochfrequenztransceiversystem nach Anspruch 2 oder 3, wobei das zweite Band in das erste Band umgewandelt wird.

5. Hybrid-Hochfrequenztransceiversystem nach Anspruch 2, wobei der Konverter (16) ein Auf-/Ab-Konverter (16) ist, der des Weiteren in der Lage ist, empfangene Signale aus dem ersten Frequenzband in das zweite Frequenzband umzuwandeln.

6. Hybrid-Hochfrequenztransceiversystem nach Anspruch 1, wobei eine unabhängige Verstärkungssteuerung für Signale in dem ersten Frequenzband bereitgestellt ist.

7. Hybrid-Hochfrequenztransceiversystem nach Anspruch 1, wobei eine duale Umwandlung verwendet wird.

8. Hybrid-Hochfrequenztransceiversystem nach Anspruch 5, wobei der Auf-/Ab-Konverter (16) einen Multiplexer zum Kombinieren aller Signale in dem ersten Frequenzband mit einem Referenzsignal und einem Gleichspannungssignal enthält.

9. Hybrid-Hochfrequenztransceiversystem nach Anspruch 4 oder 7, wobei der Konverter (16) sowohl für das erste Band als auch das zweite Band auf ein gewünschtes Frequenzband eingestellt werden kann.

10. Hybrid-Hochfrequenzsystem nach einem der vorangehenden Ansprüche, wobei der Konverter (16) Signale an den Hochfrequenztransceiver (10) über einen Block-Up-Konverter (20) sendet.

11. Hybrid-Hochfrequenztransceiversystem nach einem der vorangehenden Ansprüche, wobei der Konverter die Signale über einen Low-Noise-Block-Konverter (22) empfängt.

12. Verfahren zum Umwandeln von Signalen für ein Hybrid-Hochfrequenztransceiversystem, das einen einzelnen Hochfrequenztransceiver (10) verwendet, der in der Lage ist, Signale zu senden, die in wenigstens zwei verschiedenen Frequenzbändern entstehen, wobei Signale in einem ersten Frequenzband zur Übertragung ohne Umwandlung versendet werden und Signale in allen anderen Frequenzbändern mittels eines Konverters (16) in das erste Frequenzband umgewandelt werden, bevor sie zu dem Hochfrequenztransceiver (10) versandt werden, und **gekennzeichnet durch** den Schritt des Bereitstellens eines Hilfsanschlusses (20) für Signale in dem ersten Frequenzband sowohl auf einer Empfängerseite als auch auf einer Senderseite.

13. Verfahren nach Anspruch 12, wobei es zwei Frequenzbänder gibt, nämlich das erstes Band, welches das L-Band-Frequenzband (12) ist, und ein zweites Band.

14. Verfahren nach Anspruch 13, wobei das zweite Band im Zwischenfrequenzband von 70/140 ±18/36 MHz liegt.

15. Verfahren nach Anspruch 13, wobei das zweite Band in das erste Band umgewandelt wird.

16. Verfahren nach Anspruch 12, wobei der Konverter (16) ein Auf-/Ab-Konverter (16) ist, der des Weiteren empfangene Signale aus dem ersten Frequenzband in das zweite Frequenzband umwandelt.

17. Verfahren nach Anspruch 12, wobei eine unabhängige Verstärkungssteuerung für Signale in dem ersten Frequenzband bereitgestellt ist.

18. Verfahren nach Anspruch 12, wobei eine duale Umwandlung verwendet wird.

19. Verfahren nach Anspruch 16, wobei der Konverter (16) einen Multiplexer zum Kombinieren aller Signale in dem ersten Frequenzband mit einem Referenzsignal und einem Gleichspannungssignal enthält.

20. Verfahren nach Anspruch 15 oder 18, wobei der Konverter (16) sowohl für das erste Frequenzband als auch das zweite Frequenzband zuerst auf ein gewünschtes Frequenzband eingestellt wird.

## Revendications

1. Système émetteur-récepteur hybride de radio-fréquence comprenant un émetteur-récepteur de radio-fréquence unique (10) capable d'émettre des signaux provenant d'au moins deux bandes de fréquence différentes et agencé de telle sorte que des signaux dans une première bande de fréquence sont envoyés pour une transmission sans conversion, ainsi qu'un convertisseur (16) pour convertir des signaux dans toutes les autres bandes de fréquence vers la première bande de fréquence avant de les envoyer au système émetteur-récepteur de radio-fréquence (10) et **caractérisé par** un port auxiliaire pour des signaux de connexion dans la première bande de fréquence aussi bien d'un côté récepteur que d'un côté émetteur.

2. Système émetteur-récepteur hybride de radio-fréquence selon la revendication 1 dans lequel existent deux bandes de fréquence, soit la première bande étant la bande de fréquence L (12) et une seconde bande.

3. Système émetteur-récepteur hybride de radio-fréquence selon la revendication 2 dans lequel la seconde bande se situe dans la plage de fréquence intermédiaire de 70/140 ± 18/36 MHz.

4. Système émetteur-récepteur hybride de radio-fréquence selon la revendication 2 ou 3 dans lequel la seconde bande est convertie dans la première bande.

5. Système émetteur-récepteur hybride de radio-fréquence selon la revendication 2 dans lequel le convertisseur (16) est un convertisseur de type up/down (16) également capable de convertir des signaux reçus dans la première bande de fréquence vers la seconde bande de fréquence.

6. Système émetteur-récepteur hybride de radio-fréquence selon la revendication 1 dans lequel un contrôle de gain indépendant est pourvu pour des signaux dans la première bande de fréquence.

7. Système émetteur-récepteur hybride de radio-fréquence selon la revendication 1 dans lequel une double conversion est employée.

8. Système émetteur-récepteur hybride de radio-fréquence selon la revendication 5 dans lequel le convertisseur de type up/down (16) inclut un multiplexeur permettant de combiner tous les signaux de la première bande de fréquence avec un signal de référence et un signal de tension en courant continu.

9. Système émetteur-récepteur hybride de radio-fréquence selon la revendication 4 ou 7 dans lequel le convertisseur (16) peut être réglé pour une bande de fréquence requise aussi bien pour la première que pour la seconde bande.

10. Système émetteur-récepteur hybride de radio-fréquence selon l'une quelconque des revendications précédentes dans lequel le convertisseur (16) envoie des signaux à l'émetteur-récepteur de radio-fréquence (10) via un convertisseur de type block up (20).

11. Système émetteur-récepteur hybride de radio-fréquence selon l'une quelconque des revendications précédentes dans lequel le convertisseur reçoit les signaux via un convertisseur à faible bruit de type LNB (22).

12. Procédé de conversion de signaux pour un système émetteur-récepteur hybride de radio-fréquence employant un émetteur-récepteur de radio-fréquence unique (10) capable d'émettre des signaux provenant d'au moins deux bandes de fréquence différentes, des signaux dans une première bande de fréquence étant envoyés pour une transmission sans conversion et des signaux dans toutes les autres bandes de fréquence étant convertis vers la première bande de fréquence au moyen d'un convertisseur (16) avant d'être envoyés à l'émetteur-récepteur de radio-fréquence (10) et **caractérisé par** une étape consistant à pourvoir un port auxiliaire (20) pour des signaux dans la première bande de fréquence aussi bien d'un côté récepteur que d'un côte émetteur.

13. Procédé selon la revendication 12, dans lequel existent deux bandes de fréquence, soit la première bande étant la bande de fréquence L (12) et une seconde bande.

14. Procédé selon la revendication 13, dans lequel la seconde bande se situe dans la plage de fréquence intermédiaire de 70/140 ± 18/36 MHz.

15. Procédé selon la revendication 13, dans lequel la seconde bande est convertie dans la première bande.

16. Procédé selon la revendication 12, dans lequel le convertisseur (16) est un convertisseur de type up/down (16) convertissant également des signaux reçus dans la première bande de fréquence vers la seconde bande de fréquence.

17. Procédé selon la revendication 12, dans lequel un contrôle de gain indépendant est pourvu pour des signaux dans la première bande de fréquence.

18. Procédé selon la revendication 12, dans lequel une double conversion est employée.

19. Procédé selon la revendication 16, dans lequel le convertisseur (16) inclut un multiplexeur permettant de combiner tous les signaux de la première bande de fréquence avec un signal de référence et un signal de tension en courant continu.

20. Procédé selon la revendication 15 ou 18, dans lequel le convertisseur (16) peut être réglé pour une bande de fréquence requise aussi bien pour la première que pour la seconde bande de fréquence.
